# FASCICULE DE BREVET EUROPEEN

(11) **EP 0 346 392 B1**
(45) Date de publication et mention de la délivrance du brevet: **15.09.1993**
(21) Numéro de dépôt: 88902866.8
(22) Date de dépôt: 21.03.1988
(51) Int. Cl.: A47J 19/02

(54) **APPAREIL D'EXTRACTION DU JUS ET DE LA PULPE DE FRUITS ET LEGUMES**
VORRICHTUNG ZUR GEWINNUNG VON SAFT UND PULPE AUS FRÜCHTEN UND GEMÜSEN
APPLIANCE FOR EXTRACTING JUICE AND PULP FROM FRUIT AND VEGETABLES

(30) Priorité: 31.12.1987 FR 8718475
(43) Date de publication de la demande: 20.12.1989
(73) Titulaire: ROBOT-COUPE S.A., F-71303 Montceau-les-Mines (FR)
(72) Inventeur: LE ROUZIC, Claude, F-71300 Montceau-les-Mines (FR); GATEAUD, André, F-71420 Perrecy-les-Forges (FR); FLECHE, Michel, F-71450 Blanzy (FR)
(74) Mandataire: Viard, Jean
(86) Numéro de dépôt international: FR8800144
(87) Numéro de publication internationale: WO8906106

(56) Documents cités:
- EP-A- 0 021 974
- CH-A- 369 261
- FR-A- 1 444 849
- FR-A- 2 129 193
- FR-A- 2 338 656
- FR-A- 2 374 856
- US-A- 2 101 620
- US-A- 2 481 848
- US-A- 3 101 107

## Description

La présente invention a pour objet un appareil pour exprimer les jus de fruits et légumes, c'est-à-dire en extraire le suc, afin de consommer celui-ci, soit directement, soit sous la forme de sorbets, gelées, coulis, confitures, purées, etc..., destiné en particulier, mais non exclusivement, à être monté sur un appareil électro-ménager du type robot de cuisine.

L'opération d'extraction des jus de fruits s'opère depuis des temps immémoriaux. Dans le cas du raisin et des pommes, l'extraction du jus se fait dans un pressoir, les fruits étant pressés contre une grille formant tamis, par l'intermédiaire d'un plateau, lui-même actionné par une vis de pression.

Dans le cas des agrumes, il est également connu d'extraire le jus en coupant le citron ou l'orange en deux, et en pressant la moitié coupée sur un cône. Un presse-agrumes de ce type est connu notamment par FR-A-2 459 031.

On connaît également par FR-A-80 00375 (GELB), un appareil à rotor pour l'extraction du jus de fruits destiné en particulier aux baies. Dans cet appareil, le rotor tourne à grande vitesse à l'intérieur d'un tamis cylindrique horizontal fixe, le rotor projetant les fruits contre le tamis, ce qui provoque leur dilacération et le passage du jus à travers le tamis.

On connaît également, notamment par FR-A-2 129 193 (VERDUN), des centrifugeuses dans lesquelles le tamis est rotatif, la séparation du jus et de la pulpe s'effectuant par la force centrifuge.

US-A-2 481 848 décrit un extracteur de jus de végétaux dans lequel un outil éminceur effectue une coupe des produits qui sont ensuite râpés dans le fond de la chambre de travail et renvoyés par la force centrifuge contre un tamis. Le tamis est entraîné par un arbre moteur par l'intermédiaire d'une plaque portant un moyeu en contact avec l'arbre. Mais cet appareil ne fonctionne qu'en centrifugeuse.

Malheureusement, dans de telles centrifugeuses, les noyaux de certains fruits sont en partie concassés, de sorte qu'il peut subsister dans le jus une amertume désagréable.

Mais chacun des appareils précités n'accomplit relativement bien le travail auquel il est destiné que pour une catégorie déterminée de fruits ou de légumes.

Un objet de la présente invention est un appareil permettant de traiter tous les fruits et légumes pour en extraire les parties fluides comestibles.

Selon la présente invention, l'appareil d'extraction du jus et de la pulpe de produits végétaux comprenant un socle renfermant un moteur électrique, une cuve montée de manière amovible sur le socle de manière à ce qu'un arbre moteur fasse saillie à l'intérieur de la cuve en étant entouré par une cheminée centrale, un couvercle verrouillable sur ladite cuve et un tamis vertical dont la paroi est parallèle à la paroi cylindrique de la cuve, le tamis comprenant, une jupe pénétrant à l'intérieur de la cheminée autour de l'arbre moteur et sans contact avec celui-ci, voir aussi US-A-2 481 848. Cet appareil est caractérisé en ce qu'un mandrin peut être assujetti sur l'arbre moteur selon deux directions, l'une dans laquelle le tamis reste immobile, et l'autre dans laquelle le tamis est entraîné en rotation lorsque l'arbre moteur est en rotation et en ce qu'il comprends des outils interchangeables, montés alternativement sur l'arbre moteur par l'intermédiaire du mandrin.

Le tamis n'est jamais entraîné directement par l'arbre moteur. Il est ainsi possible d'utiliser l'appareil, soit en pressoir, soit en centrifugeuse par un montage approprié, en fonction de la nature du produit traité.

Selon le type de fruits ou légumes à traiter, l'outil tournant peut être, soit un rotor tournant à l'intérieur d'un tamis fixe, soit une râpe entraînée en rotation avec le tamis. L'outil tournant peut également être un cône presse-fruit solidarisé de l'arbre moteur.

Selon une autre caractéristique d'un mode de réalisation de l'invention, le fond de la cuve est incliné par rapport à l'horizontale et correspond avec un conduit d'évacuation du jus.

En utilisant l'invention, la rafle et les déchets tels que peaux et pépins restent à l'intérieur du tamis, ce qui ne pose pas de problème d'encombrement particulier, notamment dans les applications domestiques auxquelles le présent appareil est plus particulièrement destiné, alors que sont extraits le jus et la pulpe. Bien entendu, l'ensemble est conçu pour être d'un montage simple et d'un entretien aisé. On obtient, grâce à cet appareil, des jus, des coulis ou des pâtes de fruits et légumes pouvant être consommés immédiatement qui ont une saveur inconnue jusqu'à ce jour. En effet, dans le cas des préparations industrielles destinées à combattre l'oxydation des conservateurs altèrent le goût naturel du produit.

Selon une autre caractéristique d'un mode de réalisation de la présente invention, le pressoir pour exprimer le jus de végétaux, comprenant un socle renfermant un moteur électrique dont l'arbre fait saillie à l'intérieur d'une cuve montée de manière amovible sur le socle et fermée par un couvercle monté de manière amovible sur la cuve, différents outils pouvant être assujettis successivement sur l'arbre moteur, est caractérisé en ce qu'il comprend un tamis cylindrique fixe, et un rotor portant au moins une pale dont le bord extérieur s'étend jusqu'au voisinage du tamis. Les pales sont, de préférence, articulées sur le moyeu.

La présente invention vise également un dispositif de positionnement automatique d'un organe tournant sur un arbre moteur destiné en particulier, mais non exclusivement, aux appareils électro-ménagers.

Le montage des outils sur l'arbre moteur se fait par divers moyens tels que des écrous, des pinces, ou un encliquetage. Il est indispensable que les outils tournant à grande vitesse soient fermement assujettis sur l'arbre moteur. Or, en particulier dans le cas des appareils électro-ménagers qui sont habituellement utilisés par des ménagères sans qualification technique particulière, il est souhaitable que le montage des différents outils sur l'arbre moteur, soit le plus simple possible. Cette considération est particulièrement valable lorsqu'il s'agit de monter, non pas un simple outil comprenant un moyeu d'un profil approprié, mais un ensemble plus complexe composé de deux ou plusieurs organes coopérant l'un avec l'autre, dans le cas, en particulier, des centrifugeuses.

La présente invention a également pour objet de pallier les inconvénients des dispositifs de fixation connus et de permettre un positionnement automatique, à un niveau donné, d'un organe tournant sur un arbre moteur. Elle vise également un dispositif de positionnement automatique d'un tamis rotatif sur un arbre moteur par l'intermédiaire d'un mandrin dont le profil intérieur correspond au profil extérieur de l'arbre moteur, l'organe rotatif étant enclipsable sur le mandrin, caractérisé en ce que le tamis comporte un moyeu fileté dans le sens de rotation de l'arbre moteur, le mandrin comportant un filetage dans le sens de rotation de l'arbre moteur, dont le diamètre extérieur correspond au diamètre intérieur du filetage du moyeu, l'ensemble étant monté à l'intérieur d'une cuve présentant une cheminée dont le diamètre intérieur est supérieur au diamètre extérieur du moyeu.

Selon une autre caractéristique d'un mode de réalisation de l'invention, des nervures sont prévues à la partie supérieure de la cheminée, formant des créneaux entre lesquels viennent prendre appui les nervures et l'organe rotatif.

Ainsi, la ménagère n'a qu'à poser un organe rotatif à l'intérieur de la cuve, les nervures de l'organe pénétrant à l'intérieur des rainures de la cheminée, puis à poser le mandrin à l'intérieur de l'organe. C'est la rotation du moteur qui va donner, aux éléments de l'assemblage, le positionnement convenable.

En effet, le mandrin qui est posé sur l'arbre moteur s'enfile sur celui-ci et est entraîné en rotation dans le sens de rotation du moteur. Sous l'influence de cette rotation, le mandrin descend à l'intérieur du moyeu de l'organe rotatif, jusqu'à ce qu'il vienne en butée contre le fond de la cheminée. A ce moment, il continue à tourner, mais sans déplacement axial sur l'arbre moteur. Par suite, le moyeu de l'organe rotatif se visse sur le mandrin, ce qui provoque par un déplacement axial, l'élévation de cet organe jusqu'à son encliquetage avec le mandrin.

Lorsque le travail est terminé, le moteur étant arrêté, la ménagère retire l'ensemble mandrin - organe rotatif, et les sépare en vue de leur nettoyage.

D'autres caractéristiques et avantages apparaîtront au cours de la description qui va suivre de modes particuliers de réalisation, donnés uniquement à titre d'exemples non limitatifs, en regard des dessins sur lesquels :
- la figure.1 est constituée par l'assemblage de deux demi-coupes de l'appareil assurant, pour la partie de droite, la fonction de pressoir, et pour la partie de gauche, la fonction de centrifugeuse presse-agrume ;
- la figure 2 est une coupe verticale du montage de l'appareil en pressoir ;
- la figure 3 est constituée de deux demi-coupes, la partie droite de la figure représentant l'utilisation de l'appareil en position centrifugeuse, et la partie gauche l'appareil en position presse-agrume/centrifugeuse ;
- la figure 4, une vue du couvercle presse-fruit ;
- la figure 5 est une vue en perspective du rotor ;
- la figure.6, une coupe verticale de la partie supérieure d'une machine fonctionnant en pressoir ;
- la figure 7, une vue en élévation d'un rotor ;
- la figure 8, une vue par-dessus du même rotor ;
- la figure.9, une vue de l'ensemble en coupe verticale avant mise en rotation du moteur ;
- la figure 10, une vue également en coupe verticale de l'ensemble, après mise en route du moteur ;
- la figure 11, une vue en coupe verticale de l'appareil en position de fonctionnement ;
- la figure 12, une vue de détail d'une nervure à l'intérieur de la couronne crénelée de la jupe de l'appareil.

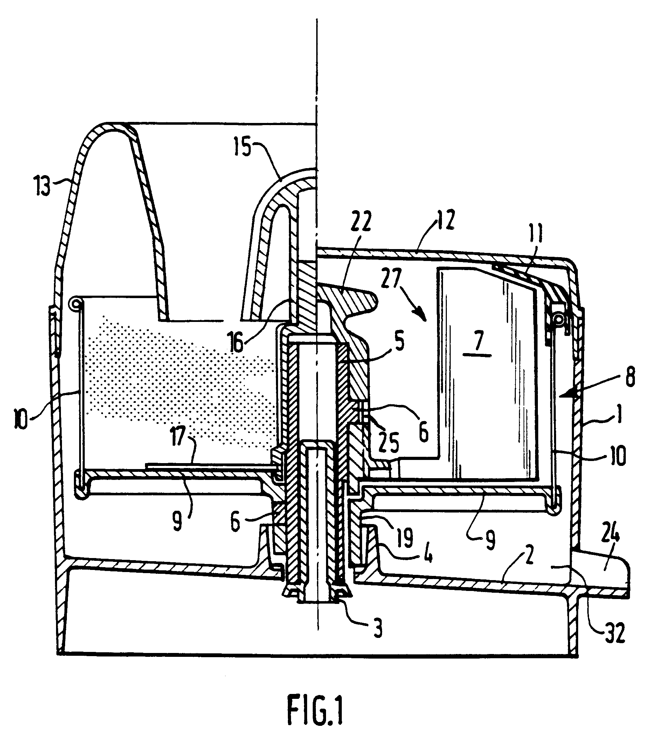

Sur la figure 1, on voit que l'appareil comprend une cuve 1 destinée à être montée d'une manière amovible sur un socle (non représenté) renfermant le moteur, par encliquetage ou par une fermeture a baïonnette. Le fond de la cuve 2 est incliné en direction d'un goulet de sortie 24, d'un angle de quelques degrés. Sur la figure 1, la pente a été considérablement augmentée pour faciliter la compréhension. On distingue sur la figure 1, l'arbre moteur 3, entraîné en rotation à une vitesse variable par le moteur (non représenté).

L'arbre 3 passe à l'intérieur de la cuve à travers une cheminée 4, formant chicane, destinée à éviter le passage du liquide et de la pulpe extraits des fruits ou légumes le long de l'arbre moteur 3. Sur l'arbre moteur 3 dont la section externe présente une forme soit polygonale, soit circulaire avec un pan coupé, est monté un mandrin 5 Les outils d'extraction sont eux-mêmes montés sur ce mandrin 5. Ils sont constitués, selon le mode de travail, soit par un rotor 7 et un tamis fixe 10, soit par le même tamis 10 mobile en rotation, une râpe 17 et éventuellement un cône presse-fruit 15. Afin de permettre un entraînement sans glissement de ces outils, le mandrin 5 présente une série d'ergots ou de tétons 6 dont un seul apparaît sur la figure 1 dans les deux positions possibles. Le tamis 10 est, par exemple, constitué par une virole percée de trous dont les dimensions sont adaptées au travail à effectuer et qui peuvent, par exemple, être des trous circulaires de 1 mm de diamètre.

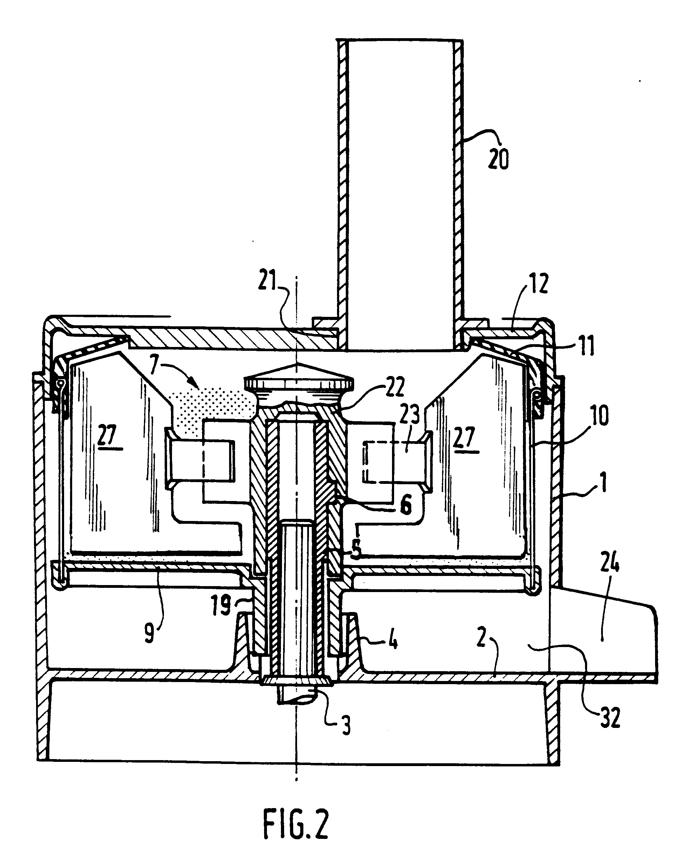

Conformément à une caractéristique de l'invention, le mandrin 5 peut être monté et encliqueté sur l'arbre 3 en deux positions différentes. La première position est représentée sur la partie droite de la figure 1 et sur la figure 2. Dans cette position, le mandrin 5 entraîne en rotation un rotor 7 portant des palettes à l'intérieur d'une cage 8 immobile, constituée par un disque de base 9, et une partie verticale cylindrique comprenant sur au moins une partie de sa surface un tamis 10, et un joint d'étanchéité 11 fixé à la partie supérieure du tamis 10, venant en contact avec la surface interne du couvercle 12. Bien entendu, le couvercle 12 est muni d'une goulotte d'introduction des fruits ou légumes qui sera décrite ultérieurement.

En utilisation pressoir, le moyeu ou jupe 19 du disque 9 est monté à l'intérieur de la cheminée 4 sans être entraîné par l'arbre moteur 3. Le tamis 10 reste donc fixe. Par contre, l'outil 7 est entraîné en rotation par le mandrin 5, les ergots 6 de celui-ci pénétrant dans des ouvertures à baïonnette prévues dans le moyeu 22 du rotor 7. Il tourne donc à la vitesse d'entraînement du moteur.

Sur la partie gauche de la figure 1, le mandrin 5 a été retourné par rapport à la position qu'il occupait sur la partie droite, c'est-à-dire que le ou les ergots 6 se trouvent maintenant à la partie inférieure du mandrin 5 et, pratiquement, juste au-dessus du niveau de la cheminée 4. Ils pénètrent dans la jupe ou moyeu 19 du disque 9. Ainsi, le mandrin 5 entraîne en rotation le disque 9 et, par suite, le tamis 10. Bien entendu, le joint (non représenté) doit être abaissé de manière à ne plus venir porter sur le couvercle. Sur la partie gauche de la figure 1, le couvercle 13 présente un entonnoir 14 et, dans la partie centrale, est monté un cône d'extraction 15 qui se fixe par l'intermédiaire d'une jupe 16 sur la partie supérieure du mandrin 5. Bien entendu, le cône 15 est ainsi également entraîné en rotation et il permet d'évacuer la pulpe de l'intérieur d'un agrume ainsi que les noyaux, la pulpe tombant sur le disque-râpeur 17 solidarisé de la surface supérieure du disque 9, position à partir de laquelle elle est évacuée, par la force centrifuge, sur le tamis 10 qui réalise la filtration du jus.

Ainsi, en fonction du fruit ou du légume à traiter, le mandrin 5 est monté dans une position ou dans l'autre, ce qui correspond à un entraînement ou non en rotation du tamis 10. Il est, de préférence, enclipsé sur l'arbre 3.

Dans ce mode de réalisation, l'appareil comprend deux couvercles distincts. Le couvercle 12 (partie droite de la figure 1) est utilisé lorsqu'on procède soit au pressurage de fruits ou légumes, soit lorsque l'on centrifuge de tels aliments. Le second couvercle 13 (partie gauche de la figure 1) est utilisé uniquement dans le cas du pressage d'agrumes ou analogues sur un cône 15.

La figure 2 représente l'appareil en fonction "pressoir". On retrouve sur cette figure, la cuve 1, le fond incliné 2 correspondant avec un goulet 24 d'évacuation du jus, l'arbre moteur 3, ainsi que le tamis 10 supporté par un disque 9 et présentant, à sa partie supérieure, un joint 11 venant porter contre la face inférieure du couvercle 12. Dans le cas de la fonction pressoir, et selon l'invention, le tamis 10 reste immobile. A cet effet, le disque 9 se prolonge vers le bas par une jupe 19 qui est bloquée à l'intérieur de la cheminée 4 par emboîtement. Bien entendu, le joint à lèvres 11, en portant contre la surface interne du couvercle 12, constitue également un blocage. Il est dans ce cas monté en position haute. La vitesse d'un tel outil peut varier de quelques dizaines de tours par minute à trois mille tours environ. Bien entendu, dans le premier cas, c'est la pression des pales qui intervient, alors qu'à des vitesses supérieures, la force centrifuge exerce ses effets.

Comme cela apparaît sur la figure 2, une goulotte 20 d'introduction des produits à presser fait saillie à la surface supérieure du couvercle 12 et entoure une ouverture 21 prévue dans ce couvercle. La goulotte 20 débouche dans la partie située entre le moyeu 22 du rotor et les pales 27 de celui-ci. Bien entendu, un poussoir (non représenté) permet, par introduction dans la goulotte, de pousser les fruits ou légumes vers le bas.

Les pales 27 sont montées sur le moyeu 22 par des liaisons 23 qui peuvent être relativement souples.

Dans le prolongement du fond 2 de la cuve 1 est prévu un goulet 24. Par ce goulet va sortir, par gravité, le jus ou les coulis, ou purée des fruits ou légumes qui ont été pressés contre le tamis 10. Les produits à presser sont introduits dans la goulotte 20 après avoir été préalablement coupés. Au cours de leur rotation, les pales 27 exercent une pression sur les produits coupés, ce qui oblige les parties les plus fines de ces produits à passer à travers les orifices de la grille 10.

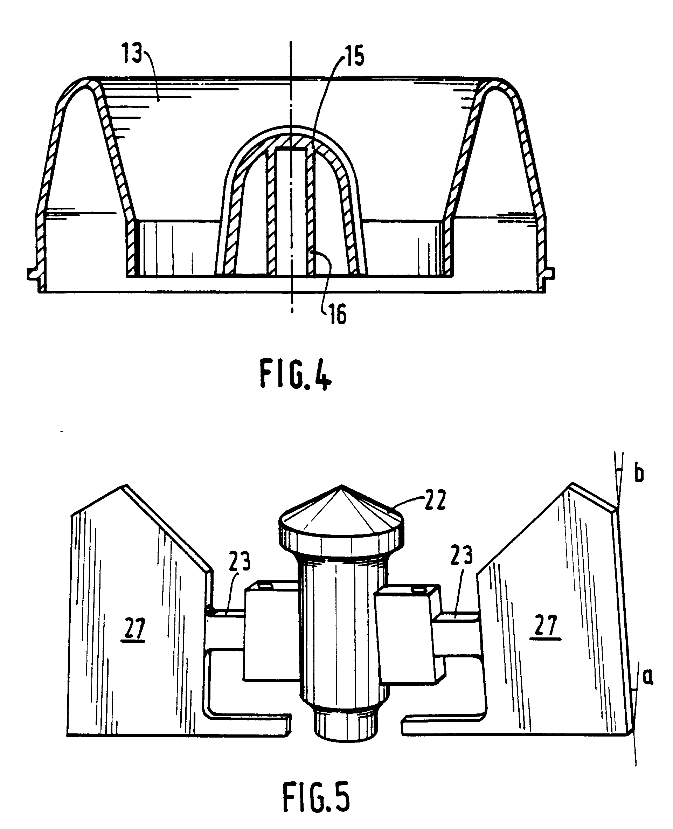

Dans le mode de réalisation représenté, l'ergot 6 pénètre à l'intérieur d'une rainure 25 formée à l'intérieur du moyeu 22 de l'outil pour réaliser un montage à baïonnette. La figure 5 représente le rotor 7 constitué comme indiqué précédemment de deux pales 27 montées sur un moyeu 22 par des liaisons 23. Ces liaisons permettent d'introduire le rotor 7, bien que celui-ci ait un encombrement supérieur au diamètre interne du joint 11. En fonction de la masse de matière à presser se trouvant entre l'extrémité extérieure des pales 27 et le tamis 10, les pales peuvent plus ou moins s'incliner par rapport à leur position d'origine pour accomplir le travail progressivement Par construction toutefois, les pales 27 sont inclinées d'un angle (a) de deux à trois degrés de l'avant vers l'arrière pour saisir la matière de bas en haut, et d'un angle (b), de bas en haut, afin d'éviter que la matière ne s'accumule dans le fond de la cuve. Mais la valeur de ces angles peut varier en fonction des produits à traiter et de la vitesse du moteur.

La matière à presser tombant dans la cuve 2 arrive sur l'une des pales 27 et, en raison de la force centrifuge, glisse sur celle-ci pour être en quelque sorte projetée sur le tamis 10 contre lequel elle est pressée par la pale suivante.

Dans tous les montages de l'appareil, on forme entre la partie inférieure du disque 9 et le fond 2 de la cuve, un espace 32 de quelques centimètres afin que la rotation, soit de l'outil, soit du tamis, ne provoque pas une émulsion du jus qui a ainsi la possibilité de reposer après son extraction.

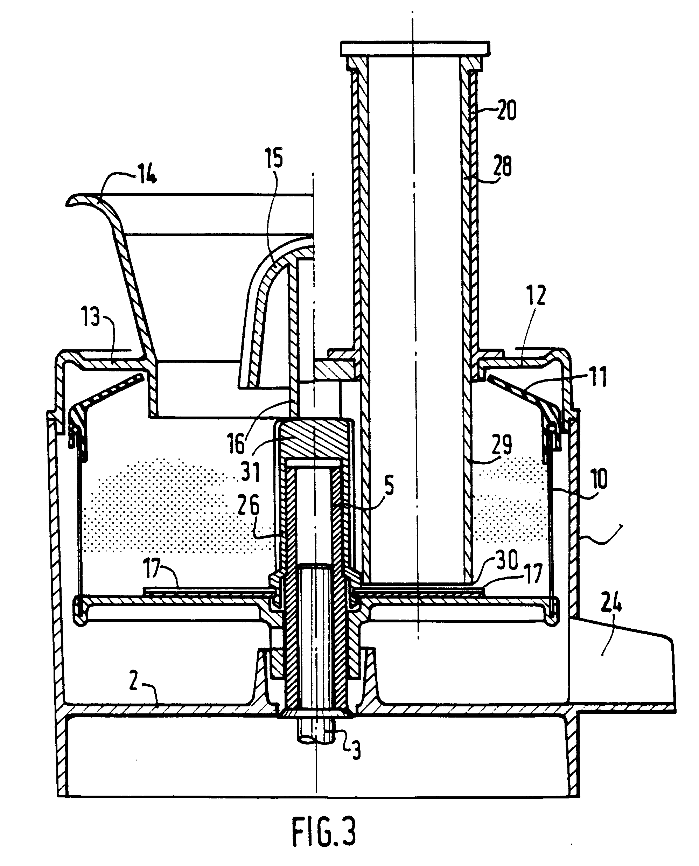

Pour passer du mode d'utilisation en pressoir qui est représenté sur la figure 2, au mode d'utilisation en centrifugeuse ou en presse-fruit qui est représenté sur la figure 3, on retire le couvercle 12, on retire l'outil 7, le mandrin 5 et le panier constitué par l'ensemble 9, 10, 11. On retourne alors le mandrin 5 et on l'assujettit à nouveau sur l'arbre 3. Du fait de ce retournement, les ergots 6 (dont un seul apparaît sur la figure), se trouvent au-dessous du plan du disque 9 et celui-ci est maintenant solidarisé avec le mandrin 5. C'est-à-dire que dans la suite des opérations, il tournera en entraînant bien entendu le tamis 10. L'appareil fonctionne alors en centrifugeuse.

On a représenté sur la figure 3, côté droit de la figure, le montage de l'appareil en centrifugeuse. Sur le mandrin 5, vient alors se fixer un manchon 26 présentant un relief interne opposé au relief extérieur du mandrin 5. Le manchon 26 porte dans le plan horizontal à sa partie inférieure, une râpe 17 entraînée en synchronisme avec le disque 9 et le tamis 10. Mais, pour obtenir la centrifugation des fruits et légumes, il est nécessaire de commencer dans un premier temps par désagréger ceux-ci. A cet effet, ils doivent être dirigés directement vers la surface de la râpe 17. Dans le cas contraire, ils risqueraient d'être entraînés directement sur le tamis 10 et l'extraction du jus ne serait pas complète. C'est pour cette raison qu'à l'intérieur de la goulotte 20 du couvercle 12, on fixe une fourrure 28 qui se prolonge à l'intérieur de la cuve par une partie 29 pour se terminer en 30 immédiatement au-dessus du disque 17. Les produits sont ainsi dans un premier temps râpés, puis par la force centrifuge, éjectés vers la paroi 10 formant tamis où le jus et la pulpe sont séparés de la peau et des noyaux, ces constituants restant à l'intérieur de la cuve.

Le jus tombe également sur le fond 2 d'où il est évacué par le goulet 24. Toutefois, il est possible de recueillir le jus dans la cuve elle-même. Bien évidemment, étant donné que le panier est animé d'un mouvement très rapide de rotation, le joint 11 ne doit pas porter contre la surface inférieure du couvercle. A cet effet, et selon une caractéristique de l'invention, le joint 11 peut prendre, à la surface supérieure du tamis 10, deux positions : une position haute dans laquelle il vient en contact avec le couvercle 12 (utilisation en pressoir), et une position basse dans laquelle son extrémité supérieure est à un niveau inférieur à celui de la face inférieure du couvercle 12 (utilisation en centrifugeuse). Dans le cas du presse-agrume, le problème du contact du joint 11 est résolu par l'emploi d'un couvercle 13 particulier. Le bord interne du joint 11 se trouvant à l'intérieur de la cuve, est percé de deux séries d'ouvertures (non représentées), par exemple trois, réparties à deux niveaux différents et qui, par coopération avec des têtons (non représentés), formés à la partie supérieure du tamis, permettent d'obtenir les deux niveaux de fixation désirés.

Dans le montage centrifugeuse ou presse-agrume, la présence du joint 11 n'est pas absolument nécessaire. En effet, l'effort exercé sur les particules de fruits ou légumes est essentiellement radial. Mais elle est cependant souhaitable, notamment dans le cas où le joint est incliné comme représenté sur les figures pour jouer le rôle de déflecteur et ramener vers le centre les particules qui auraient pu s'accumuler dans le haut du tamis sans être convenablement centrifugées.

Pour utiliser l'appareil en presse-fruit / centrifugeur représenté sur la partie gauche de la figure 3, il est nécessaire de retirer le couvercle 12 et de le remplacer par un couvercle 13, muni d'un entonnoir 14. Le couvercle 13 représenté sur la figure 4 est ainsi ouvert sur une grande partie de sa surface. Dans un souci de sécurité, une grille fixe (non représentée) peut être disposée au-dessous du cône. Pour utiliser le presse-fruit, il suffit de démonter le couvercle 12 et de le remplacer par le couvercle 13 en introduisant sur la pièce 26 le moyeu 16 d'un cône 15. La partie centrifugeuse peut rester dans l'état où elle a été montée, mais sur le manchon 26 on fixe un cône de pressage 15 dont la jupe 16 vient entourer une partie 31 de prolongation du manchon 26. Le bord de l'entonnoir 14 permet, dans ce mode de rélisation, la pose des poignets, ce qui assure un bon guidage du fruit. Il est également possible d'utiliser un couvercle 13 tel que celui qui est représenté sur les figures 1 et 4. Comme indiqué précédemment, le mouvement de rotation du cône permet sans effort d'éjecter de l'enveloppe de l'agrume d'une part le jus, d'autre part la pulpe, et enfin les noyaux ou pépins. Dans ce mode de montage, l'ensemble tombe dans un premier temps sur le disque 17 qui, par l'action de la force centrifuge, envoie les produits extraits de l'enveloppe sur la surface de tamisage 10.

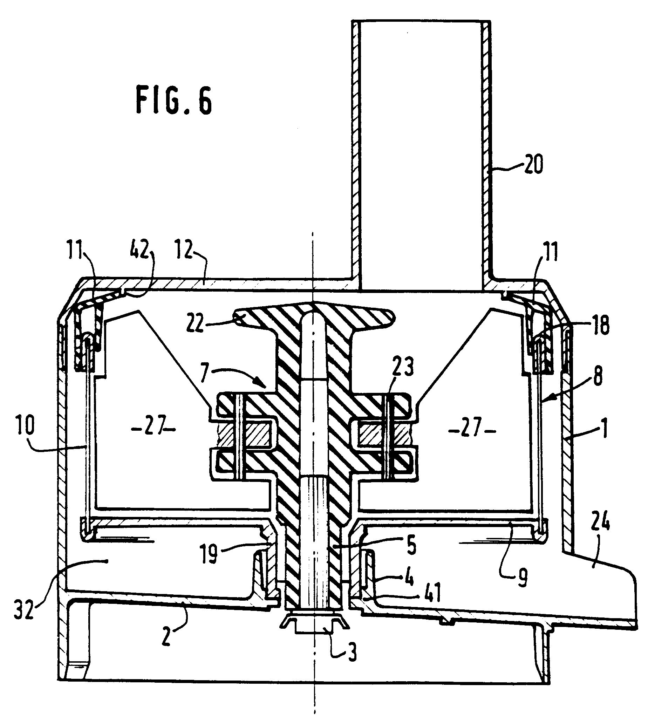

Sur la figure 6, qui représente un appareil utilisé en pressoir, l'outil est un rotor 7 tournant à l'intérieur du tamis cylindrique vertical 10. A la partie supérieure du tamis 10 est prévu un bord roulé 18 sur lequel peut venir s'assujettir un joint 11. Dans tous les montages, l'outil est encliqueté sur l'arbre moteur 3.

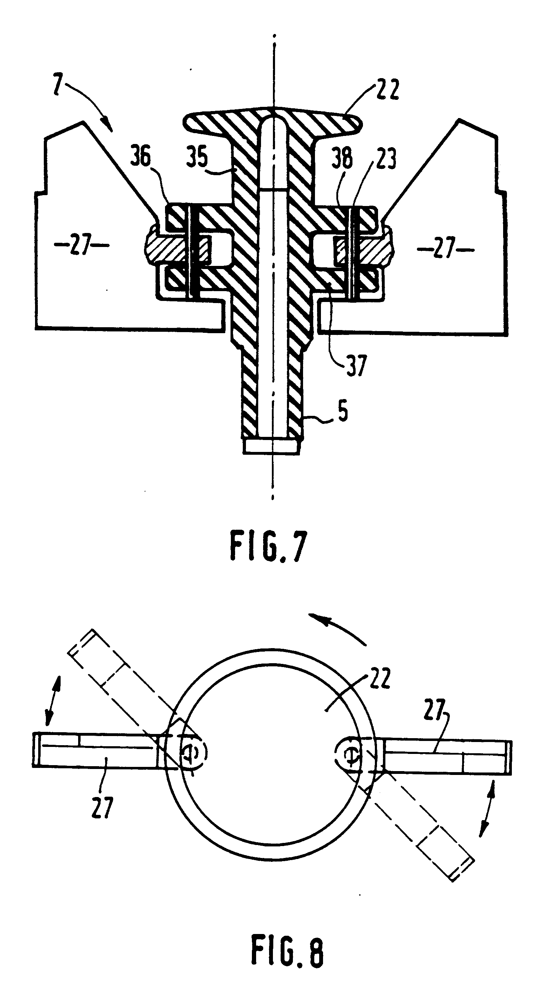

Les figures 7 et 8 représentent le rotor 7, d'une part en vue verticale coupée, et d'autre part en vue par-dessus. Le corps 35 du rotor est creux et se termine, à sa partie inférieure par un mandrin 5 destiné à s'assujettir sur l'arbre moteur 3, à l'intérieur de la cheminée 4. Il présente à sa partie supérieure un chapeau 22 qui est destiné à la préhension de l'outil et à son extraction hors de l'arbre 3. Au-dessous du chapeau 22 s'étendent deux chapes 36 et 37, à l'intérieur desquelles sont prévus deux trous 38, dans lesquels sont introduits les axes 23 de pivotement de deux pales 27. La structure des pales est telle que le centre de gravité de celles-ci se trouve éloigné au maximum afin que la force centrifuge exerce pleinement ses effets, c'est-à-dire que les pales 27 sont plus épaisses, et éventuellement plus denses, à leurs extrémités qu'au voisinage de leurs axes.

Avantageusement, les pales 27 sont libres autour des axes 23. C'est-à-dire que, à l'état de repos, elles prennent une position quelconque par rapport auxdits axes (représenté en traits pointillés sur la figure 8). Par contre, lorsque l'outil est entraîné en rotation, la force centrifuge les conduit à occuper une position radiale, c'est-à-dire qu'elles deviennent diamétralement opposées l'une à l'autre (position représentée en traits pleins sur la figure 8). Il résulte de cette disposition un avantage notable. En effet, lors de l'opération de pressage, il arrive très fréquemment que l'une des pales 27 soit plus chargée en pulpe ou en résidus que la seconde. Dans ces conditions, il se produit des vibrations qui sont nuisibles au bon fonctionnement de la machine. Grâce à cette liberté des pales 27 autour de leurs axes 23, il se produit une autorégulation de la charge des pales et, lorsqu'une pale est plus chargée que l'autre, elle prend par rapport à l'axe du rotor une position inclinée en relâchant une partie de la pulpe. L'autre pale travaille en pressant la pulpe et les résidus et se charge peu à peu de ceux-ci jusqu'à ce que l'équilibre soit rétabli. Le problème des vibrations est ainsi aisément résolu. Bien entendu, la vitesse de rotation du rotor est, dans ce cas, d'environ 1500 tours/minute pour obtenir la force centrifuge de pressage nécessaire. De préférence, les pales 27 sont inclinées de bas en haut d'un angle pouvant varier de 6 à 12 degrés, de sorte que la matière à presser, qui descend normalement vers le fond de la chambre de pressage, soit ramenée vers le haut par la rotation de l'outil, afin que toute la surface du tamis soit utilisée.

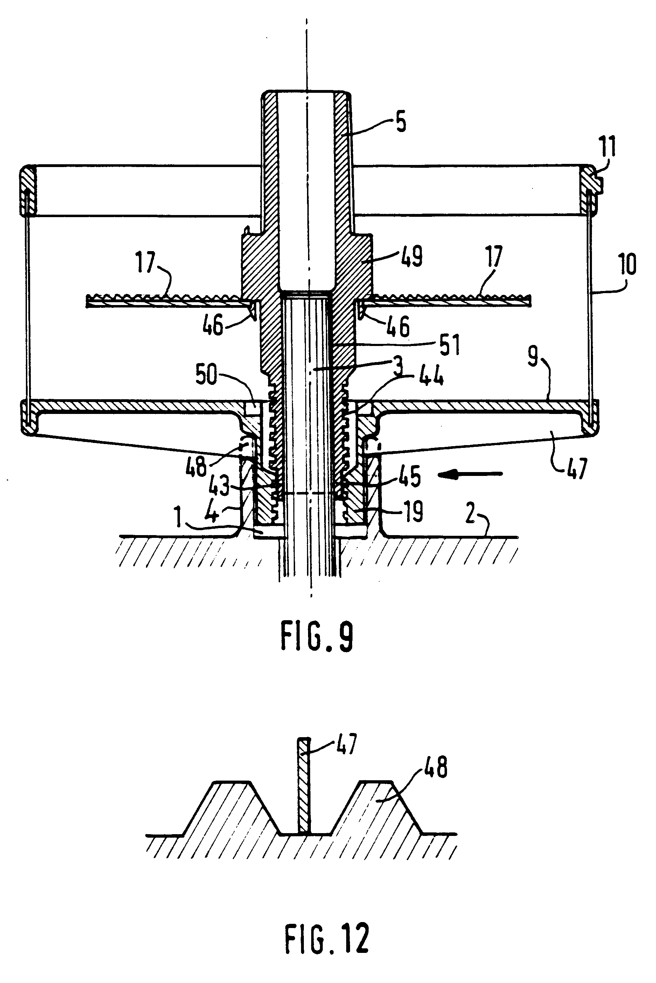

Dans l'exemple représenté sur les figures 9 à 12, l'organe rotatif est constitué par le panier 10 d'une centrifugeuse. Ce panier tourne à l'intérieur d'une cuve (non représentée), dont seul apparaît sur la figure, le fond 2 présentant un orifice central 1, à l'intérieur duquel s'élève l'arbre moteur 3 entouré par une cheminée 4.

Le tamis centrifugeur 10 comporte une jupe formant moyeu 19 d'entraînement en rotation. Sur l'arbre moteur est posé un mandrin 5 dont la partie inférieure pénètre librement à l'intérieur du filetage 43 du moyeu 19. Le mandrin 5 porte lui-même, au-dessus de la jupe 45, un filetage 44. Le mandrin 5 est par ailleurs muni de moyens d'encliquetage 46 constitués par des pattes élastiques et destinés à maintenir le disque râpeur 17.

Comme connu en soi, le mandrin 5 présente un alésage central 51, dont la partie inférieure peut se terminer par un ou deux pans coupés ou encore présenter une forme polygonale, de manière à ce que l'entraînement du mandrin par l'arbre moteur 3, s'effectue sans glissement. La Jupe 45 présente, avantageusement des moyens d'encliquetage (non représentés) sur l'arbre moteur.

Comme représenté sur la figure 9, le panier 10 présente, à sa partie inférieure, des nervures de rigidité 47. Par ailleurs, la cheminée 4 présente, à sa partie supérieure, des crans 48 (voir figure 12) entre lesquels les nervures 47 du panier 10 peuvent venir prendre appui.

Ainsi, au début des opérations lorsque la ménagère pose le panier 10 à l'intérieur de la cuve de travail, les nervures 47 viennent naturellement porter entre deux créneaux 48, et le panier reste ainsi posé sur l'extrémité supérieure de la cheminée 4. Ensuite la ménagère introduit, à l'intérieur du moyeu 19 du panier 10, le mandrin 5, dont la jupe 45 pénètre a l'intérieur du filetage 43 du moyeu 19 sans être prise avec le filetage 43 et la râpe 17.

Le fonctionnement du dispositif est le suivant. A partir de la position représentée sur la figure 9 où les différents éléments sont posés les uns sur les autres, la mise en marche du moteur, par exemple dans le sens inverse des aiguilles d'une montre, provoque, lorsque le pas de filetage 43 du moyeu 19 est dans le même sens, c'est-à-dire à gauche, le vissage du filetage 44 à l'intérieur du filetage 43 du moyeu 19, le panier étant immobilisé en rotation par les créneaux 48. Par suite, le mandrin 5 se visse à l'intérieur du moyeu 19 du panier 10 et descend axialement très rapidement, de sorte que la partie inférieure de la jupe 45 vienne en butée sur l'arbre moteur.

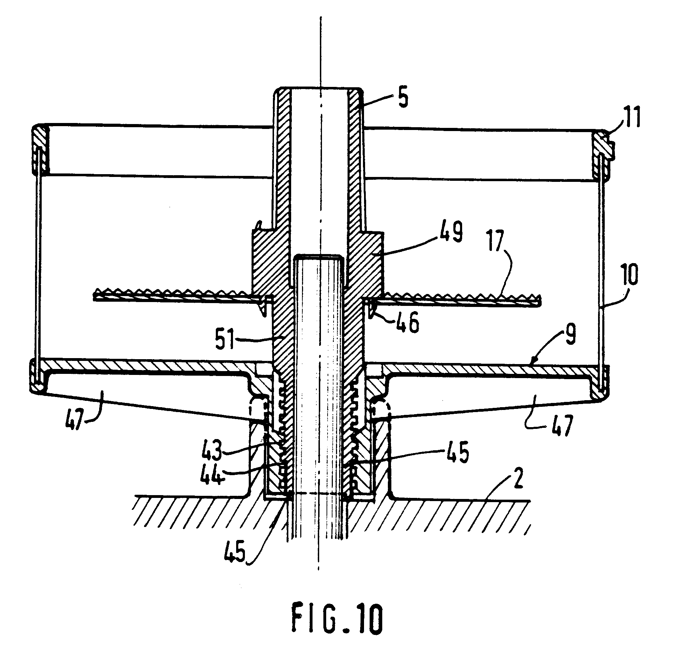

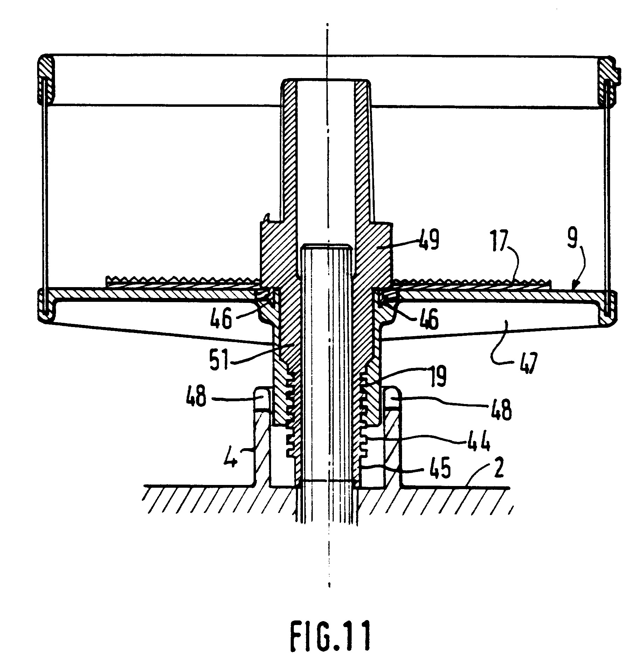

Cette position est représentée sur la figure 10. Mais, à partir de ce moment, le mandrin 5 continue de tourner toujours dans le même sens. Il en résulte que le moyeu 19 est à son tour entraîné en rotation dans le même sens et se visse sur le mandrin 5. Ce vissage provoque le soulèvement du panier 10 et le dégagement des nervures 47, hors de la partie crenelée 48 de la jupe 3. Le panier 10 peut alors entrer en rotation et il s'élève le long du mandrin jusqu'à ce que le fond 9 du panier 10 arrive au contact du manchon 49 du mandrin 5. Une rainure circulaire 50 permet la pénétration de la partie centrale du disque 17 et des moyens d'encliquetage 46. Ainsi, le mandrin 5 et le panier 10 tournent à la même vitesse et dans le même sens que l'arbre moteur 3. Cette position est représentée sur la figure 11. Finalement, c'est la hauteur des zones filetées qui fixe le niveau de l'organe rotatif à l'intérieur de la cuve 2.

Lorsque le traitement des aliments est terminé, le moteur est arrêté et l'ensemble mandrin 5, panier 10, est extrait de la cuve en vue du nettoyage. Le mandrin peut être aisément séparé du panier 10 par une lègère traction suivie d'un mouvement de rotation.

Bien entendu, il importe que les filetages 43 et 44 soient des filetages rapides afin que les mouvements de descente du mandrin 5, puis de montée du moyeu 19 sur le mandrin 5, se réalisent en une fraction de seconde.

A titre d'exemple seulement, des résultats satisfaisants ont été obtenus avec un moteur tournant à une vitesse de 1500 tours/minute, les filetages 43 et 44 étant des filetages carrés au pas de 10 à gauche dans les deux cas, le filetage étant réduit à deux filets carrés.

Le dispositif qui vient d'être décrit peut être mis en oeuvre pour tout organe rotatif présentant un moyeu entourant un mandrin amovible.

## Revendications

1. Appareil d'extraction du jus et de la pulpe de produits végétaux comprenant un socle renfermant un moteur électrique, une cuve montée de manière amovible sur le socle de manière à ce qu'un arbre moteur fasse saillie à l'intérieur de la cuve en étant entouré par une cheminée centrale, un couvercle verrouillable sur ladite cuve et un tamis vertical dont la paroi est parallèle à la paroi cylindrique de la cuve, le tamis comprenant une jupe (19) pénétrant à l'intérieur de la cheminée (4) autour de l'arbre moteur (3) et sans contact avec celui-ci, caractérisé en ce qu'un mandrin (5) peut être assujetti sur l'arbre moteur (3) selon deux directions, l'une dans laquelle le tamis (10) reste immobile, et l'autre dans laquelle le tamis (10) est entraîné en rotation lorsque l'arbre moteur (3) est en rotation, et en ce qu'il comprends des outils interchangeables (7, 17, 15) à monter alternativement sur l'arbre moteur (3) par l'intermédiaire du mandrin (5).

2. Appareil selon l'une des revendications 1 à 3, caractérisé en ce que le fond (2) de la cuve (1) est incliné en direction d'un goulet (24) de sortie du jus extrait.

3. Appareil selon l'une quelconque des revendications 1 ou 2, caractérisé en ce que le mandrin (5) est entraîné par l'arbre (3) et enclipsé sur cet arbre, le mandrin (5) portant des ergots (6) destinés à coopérer avec des rainures prévues dans les moyeux des outils (7, 17, 15).

4. Appareil selon la revendication 1, caractérisé en ce qu'il comprend deux couvercles (12, 13) amovibles utilisés respectivement lorsque l'appareil fonctionne en pressoir ou en centrifugeuse et lorsque l'appareil fonctionne en presse-fruit/centrifugeuse.

5. Appareil selon l'une quelconque des revendications précédentes, caractérisé en ce que, à la partie supérieure du tamis, est disposé un joint (11) pouvant prendre une position haute dans laquelle il est en contact avec la face intérieure du couvercle (12), et une position basse dans laquelle il est espacé de ladite face en fonction de la position du mandrin (5).

6. Appareil selon l'une quelconque des revendications précédentes, caractérisé en ce que le tamis (10) est immobile, un rotor (7) comprenant au moins une pale (27) entraîné par l'arbre (3), tournant à l'intérieur du tamis (10) de sorte que les bords de ses pales arrivent au voisinage du tamis (10), le joint (11) étant en position haute.

7. Rotor pour un appareil selon la revendication 6, caractérisé en ce que le rotor est constitué de deux pales (27) reliées à un moyeu (22) par des liaisons souples (23), les bords des pales (7) étant inclinés de l'avant vers l'arrière et du bas vers le haut.

8. Rotor pour un appareil selon la revendication 6, caractérisé en ce que deux pales (27) sont montées librement sur le rotor (7) autour d'axes verticaux (23) excentrés par rapport à l'axe du rotor, les pales (27) étant inclinées de bas en haut selon un angle de 6 à 12° pour reprendre la matière en bas du tamis.

9. Appareil selon l'une quelconque des revendications 1 à 5, caractérisé en ce que le tamis (10) est entraîné en rotation par le mandrin (5), le tamis (10) étant solidaire d'un disque (9) supportant une râpe (17), le joint (11) étant en position basse, une fourrure (28) dont la partie inférieure affleure la surface supérieure de la râpe (17) étant engagée dans la goulotte (10).

10. Appareil selon l'une quelconque des revendications 1 à 5, caractérisé en ce que un cône presse-agrume (15) est monté sur le mandrin (5), le couvercle (13) présentant une surface (14) formant entonnoir, le tamis (10) étant entraîné en rotation et le joint (11) en position basse.

11. Appareil selon la revendication 1, caractérisé en ce que la jupe (19) du tamis (10) est munie d'un filetage interne (43) de même sens que le sens de rotation de l'arbre moteur, le mandrin (5) présentant un filetage externe (44) de même sens, dont le diamètre extérieur correspond au diamètre intérieur du filetage (43) de jupe (19).

12. Appareil selon la revendication 11, caractérisé en ce que le tamis présentant des nervures (47) de rigidité, la hauteur de jupe (19) est inférieure à la hauteur de la cheminée centrale (4) de la cuve (2) dans laquelle l'organe est introduit, la surface supérieure de la cheminée (4) étant munie de créneaux (48) pour éviter l'entraînement en rotation du tamis (10) avant soulèvement de celui-ci.

13. Appareil selon l'une des revendications 1 ou 12, caractérisé en ce que le mandrin (5) comporte, de bas en haut, une jupe lisse (45), un filetage (44) et un manchon (49).

## Claims

1. Apparatus for extracting juice and pulp from vegetable products comprising a stand housing an electric motor, a bowl removably mounted on the stand so that a drive shaft surrounded by a central chimney projects inside the bowl, a lockable lid on said bowl and a vertical strainer whose wall is parallel to the cylindrical wall of the bowl, the strainer comprising a skirt (19) penetrating within the chimney (4), the skirt surrounding but not touching the drive shaft (3), characterized in that a mandrel (5) may be secured to the drive shaft (3) in either of two directions, in one of which the strainer (10) remains stationary and in the other of which the strainer (10) is rotated when the drive shaft (3) rotates, and in that it comprises interchangeable tools (7, 17, 15) which can be selectively mounted on the drive shaft (3) via the mandrel (5).

2. Apparatus according to any of claims 1 to 3, characterized in that the base (2) of the bowl (1) is inclined towards a gully (24) for removing the juice.

3. Apparatus according to either of claims 1 or 2, characterized in that the mandrel (5) is driven by and snap-fastened on the shaft (3), the mandrel (5) carrying Tugs (6) which co-operate with grooves provided in the hubs of the tools (7, 17, 15).

4. Apparatus according to claim 1, characterized in that it comprises two removable lids (12, 13) used respectively when the apparatus functions as a press or centrifuge and when it functions as a fruit-press/centrifuge.

5. Apparatus according to any of the preceding claims, characterized in that a seal (11) is located at the top of the strainer, the seal occupying either an upper position in which it is in contact with the inside face of the lid (12) or a lower position in which it is spaced from said face, these positions being a function of the position of the mandrel (5).

6. Apparatus according to any of the preceding claims, characterized in that the strainer (10) is stationary, a rotor (7) driven by the shaft (3) and carrying at least one blade (27), the rotor revolving within the strainer (10) so that the edges of its blades extend up to the strainer (10), the seal (11) being in the higher position.

7. A rotor for an apparatus according to claim 6, characterized in that the rotor is constituted by two blades (27) connected to a hub (22) by flexible links (23), the edges of the blades (7) being inclined from front to rear and from top to bottom.

8. A rotor for an apparatus according to claim 6, characterized in that two blades (27) are freely mounted on the rotor (7) about vertical axes (23) which are eccentric relative to the axis of the rotor, the blades (27) being inclined from top to bottom at an angle in the range 6° to 12° to pick up the matter in the bottom of the strainer.

9. Apparatus according to any of claims 1 to 5, characterized in that the strainer (10) is rotated by the mandrel (5), the strainer (1) being integral with a disc (9) supporting a grater (17), the seal (11) being in the lower position, a lining (28) whose lower portion is flush with the upper surface of the grater (17) being engaged inside the chute (10).

10. Apparatus according to any of claims 1 to 5, characterized in that a citrus-press cone (15) is mounted on the mandrel (5), the surface (14) of the lid (13) forming a funnel, the strainer (10) being rotated and the seal (11) being in the lower position.

11. Apparatus according to claim 1, characterized in that the skirt (19) of the strainer (10) is provided with an internal thread (43) in the same direction as the direction of rotation of the drive shaft, the mandrel (5) having an external thread (44) in the same direction, the external diameter of which corresponds to the internal diameter of the thread (43) on the skirt (19).

12. Apparatus according to claim 11, characterized in that the strainer has strengthening ribs (47), the height of the skirt (19) being less than that of the central chimney (4) of the bowl (2) into which the component is inserted, the upper surface of the chimney (4) being provided with notches (48) to prevent the strainer (10) from being rotated before it has been raised.

13. Apparatus according to any of claims 1 to 12, characterized in that the mandrel (5) comprises, from bottom to top, a smooth skirt (45), a thread (44) and a sleeve (49).

## Patentansprüche

1. Vorrichtung zur Gewinnung von Saft und Pulpe aus pflanzlichen Erzeugnissen, die einen einen elektrischen Motor enthaltenden Sockel, eine derart auf dem Sockel lösbar angebrachte Schüssel, daß eine Antriebswelle im Inneren der Schüssel einen von einem mittigen Stutzen umgebenen Vorsprung bildet, einen verriegelbaren Deckel auf der Schüssel und ein vertikales Sieb umfaßt, dessen Wandung parallel zur zylindrischen Wandung der Schüssel verläuft, wobei das Sieb eine Schürze (19) aufweist, die um die Antriebswelle (3) herum und ohne Berührung mit dieser in das Innere des Stutzens (4) hineinragt, dadurch gekennzeichnet, daß auf der Antriebswelle (3) ein Werkzeugfutter (5) in zwei Richtungen befestigbar ist, der einen, in der das Sieb (10) unbewegt bleibt, und der anderen, in der das Sieb (10) in Rotation versetzt wird, wenn die Antriebswelle rotiert, und dadurch, daß sie auswechselbare Werkzeuge (7, 17, 15) zur alternativen Montage auf der Antriebswelle (3) mittels des Werkzeugfutters (5) umfaßt.

2. Vorrichtung nach einem der Ansprüche 1 bis 3, dadurch gekennzeichnet daß der Boden (2) der Schüssel (1) in Richtung einer Abflußrinne (24) für den extrahierten Saft geneigt ist.

3. Vorrichtung nach Anspuche 1 oder 2, dadurch gekennzeichnet, daß das Werkzeugfutter (5) durch die Welle (3) angetrieben wird und auf diese Welle aufgeklipst ist, wobei das Werkzeugfutter (5) Nocken (6) trägt, die dazu dienen, mit in den Naben der Werkzeuge (7, 17, 15) vorgesehenen Aussparungen zusammenzuwirken.

4. Vorrichtung nach Anspruch 1, dadurch gekennzeichnet, daß sie zwei abnehmbare Deckel (12, 13) umfaßt, die verwendet werden, wenn die Vorrichtung als Presse oder als Zentrifuge arbeitet beziehungsweise wenn die Vorrichtung als Saftpresse/Zentrifuge arbeitet.

5. Vorrichtung nach einem der vorhergehenden Ansprüche, dadurch gekennzeichnet, daß am oberen Abschnitt des Siebs eine Abdichtung (11) angeordnet ist, die eine obere Position, in der sie mit der Innenfläche des Deckels (12) in Kontakt ist, und eine untere Position einnehmen kann, in der sie in Abhängigkeit Von der Position des Werkzeugfutters (5) von der Fläche beabstandet ist.

6. Vorrichtung nach einem der vorhergehenden Ansprüche, dadurch gekennzeichnet, daß das Sieb (10) unbeweglich ist, wobei ein Rotor (7) wenigstens eine durch die Welle (3) angetriebene Schaufel (27) aufweist und sich im Inneren des Siebs (10) derart dreht, daß die Kanten seiner Schaufeln in die Nähe des Siebs (10) gelangen, wobei sich die Abdichtung (11) in der oberen Position befindet.

7. Rotor für eine Vorrichtung nach Anspruch 6, dadurch gekennzeichnet, daß der Rotor aus zwei Schaufeln (27) gebildet ist, die durch biegsame Verbindungen (23) mit einer Nabe (22) verbunden sind, wobei die Kanten der Schaufeln (27) schräg von vorne nach hinten und von unten nach oben verlaufen.

8. Rotor für eine Vorrichtung nach Anspruch 6, dadurch gekennzeichnet, daß zwei Schaufeln (27) auf dem Rotor (7) um vertikale, zur Rotorachse parallel versetzte Achsen (23) herum frei drehbar angebracht sind, wobei die Schaufeln (27) von unten nach oben um einen Winkel von 6° bis 12° geneigt sind, um die Masse im unteren Teil des Siebs wieder aufzunehmen.

9. Vorrichtung nach einem der Ansprüche 1 bis 5, dadurch gekennzeichnet, daß das Sieb (10) durch das Werkzeugfutter (5) in Rotation versetzt wird, wobei das Sieb (10) mit einer ein Reibeisen (17) tragenden Scheibe (9) fest verbunden ist, die Abdichtung (11) sich in der unteren Position befindet und eine Zylinderbüchse (28), deren Unterseite die Oberseite des Reibeisens (17) erreicht, in ein Füllrohr (20) eingesetzt ist.

10. Vorrichtung nach einem der Ansprüche 1 bis 5, dadurch gekennzeichnet, daß auf dem Werkzeugfutter (5) ein Entsafterkegel (15) angebracht ist, wobei der Deckel (13) eine einen Trichter bildende Oberfläche (14) aufweist, das Sieb (10) in Rotation versetzt ist und die Abdichtung (11) sich in der unteren Position befindet.

11. Vorrichtung nach Anspruch 1, dadurch gekennzeichnet, daß die Schürze (19) des Siebs (10) mit einem Innengewinde (43) mit dem gleichen Drehsinn wie die Rotation der Antriebswelle versehen ist, wobei das Werkzeugfutter (5) ein Außengewinde (44) mit dem gleichen Drehsinn aufweist, dessen Außendurchmesser dem Innendurchmesser des Gewindes (43) der Schürze (19) entspricht.

12. Vorrichtung nach Anspruch 11, dadurch gekennzeichnet, daß die Höhe der Schürze (19) geringer als die Höhe des mittigen Stutzens (4) der Schüssel (2) ist, in den das Element eingeführt ist, wobei das Sieb Versteifungsrippen (47) aufweist und die Oberseite des Stutzens (4) mit Vorsprüngen (48) versehen ist, um zu verhindern, daß das Sieb (10) vor einem Anheben desselben in Rotation versetzt wird.

13. Vorrichtung nach Anspruch 1 oder 12, dadurch gekennzeichnet, daß das Werkzeugfutter (5) von unten nach oben eine glatte Schürze (45), ein Gewinde (44) und eine Muffe (49) umfaßt.
